(19) Europäisches Patentamt / European Patent Office / Office européen des brevets

(11) **EP 4 269 921 B1**

(12) **EUROPEAN PATENT SPECIFICATION**

(45) Date of publication and mention
of the grant of the patent:
**04.03.2026 Bulletin 2026/10**

(21) Application number: **22828560.7**

(22) Date of filing: **27.01.2022**

(51) International Patent Classification (IPC):
*F26B 3/30* $^{(2006.01)}$   *H01M 4/04* $^{(2006.01)}$
*F26B 21/06* $^{(2006.01)}$   *F26B 25/06* $^{(2006.01)}$

(52) Cooperative Patent Classification (CPC):
**F26B 13/002; F26B 3/30; F26B 13/007;
F26B 13/008; H01M 4/04; H01M 4/0404;
H01M 4/0471; H01M 4/139;** Y02E 60/10

(86) International application number:
**PCT/KR2022/001447**

(87) International publication number:
**WO 2022/270707 (29.12.2022 Gazette 2022/52)**

(54) **INFRARED HEAT SOURCE MODULE AND METHOD OF MANUFACTURING AN ELECTRODE USING THE MODULE**

INFRAROTWÄRMEQUELLENMODUL UND VERFAHREN ZUR HERSTELLUNG EINER ELEKTRODE

MODULE DE SOURCE DE CHALEUR INFRAROUGE ET PROCÉDÉ DE FABRICATION D'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2021 KR 20210080776**

(43) Date of publication of application:
**01.11.2023 Bulletin 2023/44**

(73) Proprietor: **LG Energy Solution, Ltd.
Seoul 07335 (KR)**

(72) Inventors:
• **CHOI, Soon Sik
Daejeon 34122 (KR)**
• **KO, Young Kuk
Daejeon 34122 (KR)**
• **KWON, Oh Cheol
Daejeon 34122 (KR)**
• **KIM, Ji Hwan
Daejeon 34122 (KR)**
• **LEE, Jeong Won
Daejeon 34122 (KR)**

(74) Representative: **Plasseraud IP
104 Rue de Richelieu
CS92104
75080 Paris Cedex 02 (FR)**

(56) References cited:
CN-A- 101 598 485   CN-U- 206 153 096
CN-U- 212 670 066   JP-A- 2004 327 203
JP-A- 2004 327 203   JP-A- 2010 067 579
JP-A- 2012 198 012   JP-A- 2018 049 717
JP-A- 2020 149 889   JP-A- H02 311 373
JP-A- H1 038 462   JP-A- S63 256 166
KR-A- 20220 030 745   US-A- 3 826 014
US-A1- 2011 289 790

## Description

## Technical Field

Cross-Reference with Related Applications

This application claims the benefit of priority based on Korean Patent Application No. 10-2021-0080776 dated June 22, 2021.

Technical Field

The present application relates to an infrared heat source module and a method of manufacturing an electrode using the infrared heat source module.

## Background Art

A secondary battery generally consists of electrodes (positive and negative electrodes), a separator, and an electrolyte, and is manufactured through a series of steps consisting of an electrode process, an assembly process, and an activation process. Here, the positive electrode and the negative electrode are prepared by coating a slurry comprising an active material on a current collector such as an aluminum or copper sheet, mesh, film, or foil, and then drying it.

Meanwhile, the electrode process is also referred to as an electrode plate process, and is a process of manufacturing a positive electrode and a negative electrode, which are essential components of a secondary battery. The electrode process may be specifically divided into a mixing process, a coating process, a rolling (calendar) process, a slitting process, and a drying process.

The positive electrode slurry prepared in the mixing process is applied to the positive electrode current collector in the coating process. Here, the negative electrode slurry is also applied to the negative electrode current collector in the coating process. The slurry applied to each current collector increases the energy density through the rolling process and is cut to meet the designed specifications in the slitting process.

After cutting, moisture in the slurry applied to each current collector is removed through the drying process before entering the assembly process. At this time, hot air or infrared rays are mainly used for drying the coated slurry, where a drying method using infrared rays may be adopted to secure a better drying efficiency. Patent Document 1 relates to a method of manufacturing an electrode comprising a step of drying an electrode sheet, wherein the drying is characterized by irradiating it with infrared light having a wavelength in the range of 1 to 3 $\mu$m.

However, when the drying method using infrared rays is applied to the drying process of the electrode process, the coated part (the part where the slurry is applied) and the uncoated part (the part where the slurry is not applied) existing in the current collector depending on the process environment have different coefficients of thermal expansion, whereby the electrodes may cause problems such as wrinkles or cracks.

The problems such as wrinkles or cracks in the electrodes may affect adhesion force between the slurry and the current collector, and the like, and in this case, a problem such as separation of the slurry and the current collector during post-processing may occur.

Therefore, when the drying method using infrared rays is applied to the drying process of the electrode process, there is a need for a method capable of minimizing problems such as wrinkles or cracks in the electrodes, and the like.

[Prior Art Documents]

(Patent Document 1) KR Unexamined Patent Publication No. 10-2016-0037763
CN 206 153 096 U and JP 2012 198012 A disclose coating machine drying devices.

## Disclosure

## Technical Problem

The present application relates to an infrared heat source module capable of minimizing problems such as wrinkles or cracks in electrodes, and the like, and a method of manufacturing an electrode using the infrared heat source module.

Also, the present application relates to an infrared heat source module capable of minimizing problems such as wrinkles or cracks in electrodes even if patterns of a coated part and an uncoated part present in a current collector are different, and a method of manufacturing an electrode using the infrared heat source module.

In addition, the present application relates to an infrared heat source module capable of improving a drying efficiency of a coated part present in a current collector, and a method of manufacturing an electrode using the infrared heat source module.

**Technical Solution**

The invention is as defined by the appended claims.

The infrared heat source module according to the present invention is used for drying an electrode slurry, which is one comprising a frame extending in one direction; one or more shield films mounted on the frame; and an infrared heat source mounted on the frame, wherein the shield films are mounted on the frame so that the shield films can be repositioned along one direction of the frame, and at least a portion of the heat generated from the infrared heat source can be blocked.

The infrared heat source module further comprises a position change part mounted on the frame to enable a position change of the at least one shield film.

A groove having a predetermined space is formed in the position change part, and a portion of the shield film is inserted into the groove to couple the shield film to the groove.

The position change part further comprises a rail which is provided in the groove, the shield film being coupled to the rail, the position of the shield film can be easily changed due to wheels provided on the rail.

The infrared heat source is configured to emit light having a wavelength ranging from 3 $\mu$m to 50 $\mu$m.

In addition, the method of manufacturing an electrode according to the present invention is one comprising a step of drying an electrode slurry formed on a current collector, wherein in the current collector, a coated part where the electrode slurry is coated, and an uncoated part where the electrode slurry is not coated are present, the drying is performed by applying heat to an infrared heat source module according to one example of the present application in a state where the module is placed on the current collector coated with the electrode slurry, and in the drying process, the shield films of the infrared heat source module are positioned to block at least a portion of the heat applied to the uncoated part from the infrared heat source of the heat source module.

**Advantageous Effects**

The present application can provide an infrared heat source module capable of minimizing problems such as wrinkles or cracks in electrodes, and a method of manufacturing an electrode using the infrared heat source module.

Also, the present application can provide an infrared heat source module capable of minimizing problems such as wrinkles or cracks in electrodes, and the like even if patterns of a coated part and an uncoated part present in a current collector are different, and a method of manufacturing an electrode using the infrared heat source module.

In addition, the present application can provide an infrared heat source module capable of improving drying efficiencies of a coated part present in a current collector, and a method of manufacturing an electrode using the infrared heat source module.

**Description of Drawings**

Figure 1 is an exemplary diagram briefly showing an infrared heat source module according to one example of the present application.

Figure 2 is an exemplary diagram for explaining position change of shield films in an infrared heat source module according to one example of the present application.

Figure 3 is an exemplary diagram for explaining a position change part having a groove and a rail in an infrared heat source module according to one example of the present application, and a shield film coupled to the position change part.

Figure 4 is an exemplary diagram for explaining cases in which shield films are located in openings, an upper end of openings, and a lower end of openings in an infrared heat source module according to one example of the present application.

Figure 5 is an exemplary diagram for explaining a method of manufacturing an electrode according to one example of the present application.

Figure 6 is an exemplary diagram for explaining a drying method applied to a conventional method of manufacturing an electrode.

Figure 7 is a view showing a state before a shield film is coupled to a groove of a position change part.

Figures 8 and 9 are views relating to the drying rate of the coated part present in the current collector measured in Example 1 and Comparative Example 1.

Figure 10 is a view of an electrode in which wrinkles are generated through a drying process according to Comparative Example 1.

**Best Mode**

Among the physical properties mentioned in the present application, when the measurement temperature affects a physical property, the relevant physical property is a physical property measured at room temperature, unless otherwise specified.

The term room temperature as used in the present application is a natural temperature without warming or cooling, which may mean, for example, any one temperature within the range of 10°C to 30°C, for example, a temperature of about 15 °C or more, about 18 °C or more, about 20°C or more, about 23°C or more, about 27°C or less, or 25°C.

The term middle infrared (MIR) as used in the present application may mean light having a wavelength ranging from 1 $\mu$m to 50 $\mu$m.

The term current collector as used in the present application may be a metal foil capable of being used in a secondary battery, where an aluminum foil may be used when manufacturing a positive electrode, and a copper foil may be used when manufacturing a negative electrode. In general, when manufacturing a secondary battery, the current collector is made of a long sheet-like metal foil, and the thickness is not particularly limited, but it may have a thickness of, for example, 3 $\mu$m to 500 $\mu$m.

The term electrode slurry or slurry as used in the present application is a term encompassing a positive electrode slurry and a negative electrode slurry to be coated on the current collector. The positive electrode slurry may generally comprise a positive electrode active material, a conductive material and a binder, and the like, and the negative electrode slurry may generally comprise a negative electrode active material, a binder, and the like. Here, as the positive electrode active material, one known in the art may be used, and the type thereof is not particularly limited, which is, for example, lithium cobaltate, lithium nickelate, lithium manganate, and the like. In addition, as the negative electrode active material, one known in the art may be used as well, and the type thereof is not particularly limited, which is, for example, graphite and hard carbon, and the like. In the case of the binder, polyvinylidene fluoride (PVDF) is exemplified, but if it is known in the art, it may be used without limitation.

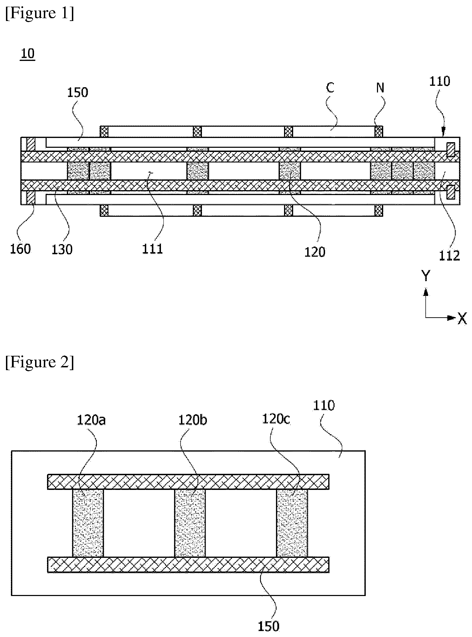

Referring to Figure 1, the infrared heat source module (10) according to the present invention comprises a frame (110) extending in one direction, one or more shield films (120) mounted on the frame, and an infrared heat source (130) mounted on the frame. Meanwhile, the infrared rays emitted from the infrared heat source (130) may be emitted in the form of heat.

The infrared heat source module (10) according to one example of the present application may be used to dry the electrode slurry coated on the current collector.

The frame (110) of the infrared heat source module (10) according to one example of the present application may provide with an opening (111). The infrared heat source (130) may emit infrared rays, and the emitted infrared rays may be exposed to the outside through the opening (111) provided in the frame (110). The infrared rays (or heat) exposed to the outside through the opening (111) come into contact with the electrode slurry coated on the current collector, and the electrode slurry is dried while moisture is removed. Here, the term outside may mean the outside of the infrared heat source module (10).

In Figure 1, it is shown that only one opening (111) is formed, but one or more openings (111) may be formed, without being particularly limited.

In addition, the frame (110) may comprise a support part (112) which is a part excluding the opening (111). Here, the support part (112) may provide a space in which components such as the shield films (120) and the infrared heat source (130) are mounted to the frame (110). Referring to Figure 1, the shield films (120) and the infrared heat source (130) are mounted in the support part (112).

The support part (112) may surround the opening (111) so that the shield films (120) can be stably mounted on the frame (110). Referring to Figure 1, the rectangular opening (111) is formed in the center of the frame (110), and the support part (112) surrounds the opening (111).

Also, referring to Figure 1, the support part (112) has a rectangular shape, and the opening (111) has a rectangular shape, so that the frame (110) has a rectangular shape that a rectangular space is opened in the central part. However, in Figure 1, the shape of the opening (111) and the support part (112) is illustrated as a rectangle, but this is only an example, and their shapes are not particularly limited.

The shield film (120) of the infrared heat source module (10) is mounted on the frame (110) so as to block at least a portion of infrared rays (or heat) generated from the infrared heat source (130). Specifically, the shield film (120) may be mounted on the support part (112) of the frame (110), and is mounted on a position change part (150) mounted on the support part (112) of the frame (110) to be described below.

The shield film (120) of the infrared heat source module (10) according to the present application may be changed in position along one direction in which the frame (110) extends.

Here, the position change of the shield film (120) means that the shield film (120) moves toward an arbitrary direction. For example, referring to Figure 1, the frame (110) extends in the x-axis direction, and the shield film (120) can be repositioned along the x-axis direction, which is one direction that the frame (110) extends. That is, the shield film (120) can be repositioned not only in the +x direction but also in the -x direction (180° direction in the +x direction).

Also, in another example, the shield film (120) may be repositioned in another direction other than one direction where the frame (110) extends according to design conditions. For example, in Figure 1, the position may be changed along the y-axis direction, and in some cases, the position may be changed along a direction or the like inclined by 45 degrees from the x-axis.

In the electrode process of the secondary battery, the electrode slurry is coated on the current collector, and then subjected to a drying process, where a coated part on which the electrode slurry is coated and an uncoated part on which the electrode slurry is not coated are present in the current collector. Conventionally, in the drying process, the drying was performed in a batch without distinction between the coated part and the uncoated part, but problems such as wrinkles or cracks of the electrodes occurred due to the difference in the coefficients of thermal expansion between the coated part and the uncoated part.

In addition, according to the prior art, the drying was performed in a batch without distinction between the coated part and the uncoated part, and in this case, the uncoated part on which the electrode slurry is not coated was dried first, whereas the coated part on which the electrode slurry required more drying time in order for the electrode slurry of the coated part to be dried to the inside. As a result, when the electrode slurry of the coated part went through the drying process sufficient to be dried to the inside, the uncoated part was overdried, and the wrinkles or cracks, and the like of the electrodes caused by the difference in the coefficients of thermal expansion between the coated part and the uncoated part were further accelerated by such overdrying.

In addition, due to the wrinkles or cracks, and the like formed on the electrodes, nonuniform infrared rays (or heat) contacted with the electrode slurry of the coated part, thereby limiting uniform drying, and the infrared rays (or heat) were dispersed to the outside by the wrinkles or cracks, and the like, whereby the drying efficiency for the electrode slurry of the coated part was reduced.

Conversely, if the drying time was shortened to prevent overdrying of the uncoated part, there was a problem in that the electrode slurry of the coated part was not sufficiently dried.

The infrared heat source module (10) according to the present application comprises at least one shield film (120), wherein the shield film (120) minimizes the infrared rays (or heat) emitted from the infrared heat source (130) from contacting the uncoated part, and allows the infrared rays (or heat) emitted from the infrared heat source (130) to contact the coated part, it is possible to minimize the problem caused by the difference in the coefficients of thermal expansion between the coated part and the uncoated part. In addition, the infrared heat source module (10) can reduce wrinkles or cracks, and the like in the electrodes, so that it is possible to improve the drying efficiency for the electrode slurry of the coated part.

In addition, the infrared heat source module (10) according to an example of the present application can prevent overdrying that may occur in the uncoated part through the shield film (120), whereby the slurry for the electrode of the coated part is sufficiently dried. Even if it is possible to suppress the acceleration of wrinkles or cracks of the electrode, it is possible to improve the drying efficiency for the electrode slurry of the coated part.

In addition, the shield film (120) of the infrared heat source module (10) according to the present application can be repositioned, so that even if the patterns of the coated part and the uncoated part present in the current collector vary, it can minimize the infrared rays (or heat) from contacting the uncoated part accordingly, and can allow the infrared rays (or heat) to contact the coated part.

There may be a plurality of shield films (120) of the infrared heat source module (10) according to one example of the present application, and when there is a plurality of shield films (120), the respective shield films (120) can be independently repositioned. However, the position change means moving toward an arbitrary direction as described above, and does not mean changing the arrangement position of each shield film (120).

Referring to Figure 2, the shield films (120) are provided with a first shield film (120a), a second shield film (120b), and a third shield film (120c) in a state where they are sequentially arranged in a direction from the left end of the frame (110) to the right. Here, the meaning that the plurality of shield film (120) can be independently repositioned means that the first shield film (120a), the second shield film (120b), and the third shield film (120c) move each independently toward the +x direction or the -x direction, but it does not mean that the second shield film (120b) moves in a direction from the left end of the frame (110) to the right beyond the first shield film (120a) so that the arrangement position is different from that of the previous one in the order of the second shield film (120b), the first shield film (120a), and the third shield film (120c).

The infrared heat source module (10) further comprises a position change part (150) mounted on the frame (110). Specifically, the position change part (150) may be mounted on the support part (112) of the frame (110) or mounted on the wall surface of the support part (112) inside the opening (111) of the frame (110). The shield film (120) may be coupled to the position change part (150) mounted on the frame (110) to be repositioned.

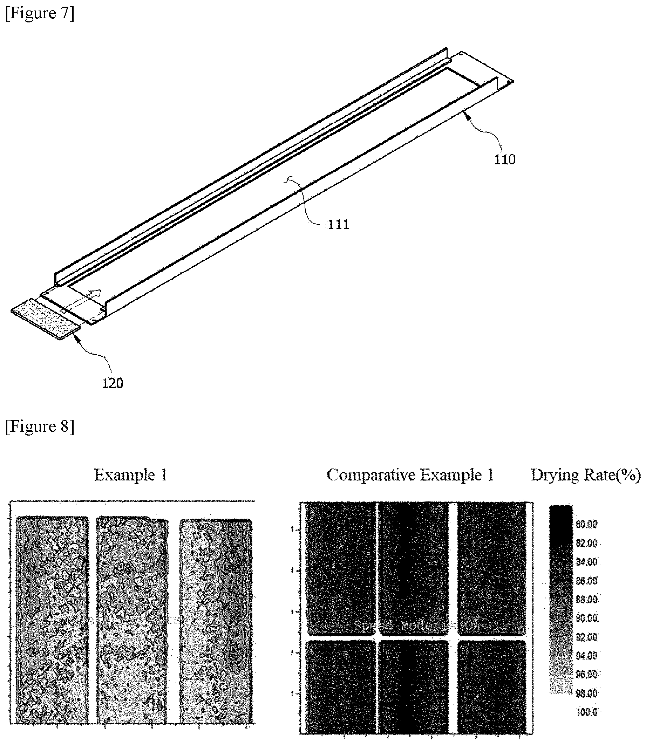

In the position change part (150), a groove (151) having a predetermined space is formed so that the shield film (120) may be coupled thereto. A portion of the shield film (120) is coupled while being inserted into the groove (151), where the groove (151) may have more free space even when the shield film (120) is coupled thereto. The free space of the groove (151) means a space to the extent that the shield film (120) can be repositioned while the shield film (120) is not separated from the groove (151). For example, as shown in Figure 7, both ends of the shield film (120) may be movably coupled while being inserted into the groove (151).

In addition, the position change part (150) comprises a rail (152) for smooth position change of the shield film (120). A portion of the shield film (120) is coupled to the rail (152), and it may be possible to smoothly change the position of the shield film (120) through a moving device such as wheels provided on the rail (152). The rail (152) is provided inside the above-mentioned groove (151), and the shield film (120) may be inserted into the groove (151) and simultaneously coupled to the rail (152), thereby more stably being repositioned.

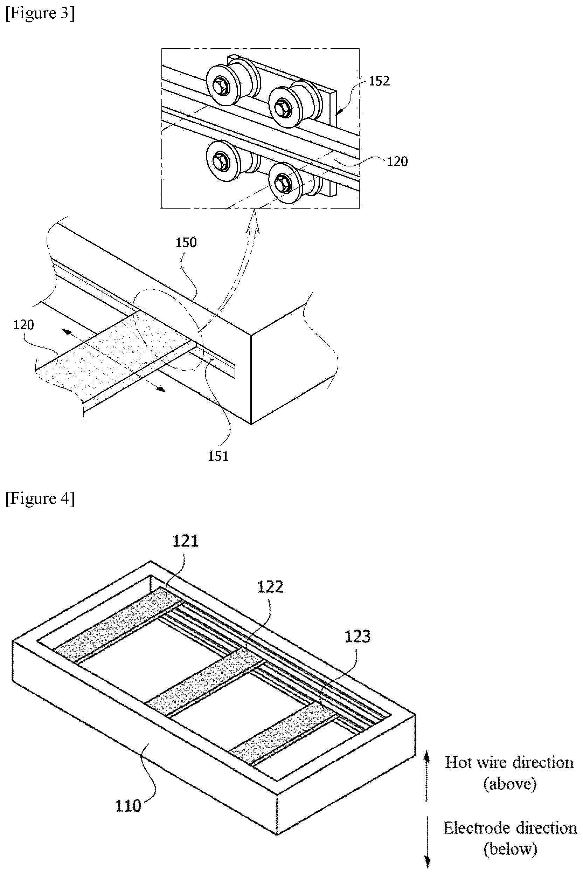

Referring to Figure 3, the rail (152) provided inside the groove (151) can be confirmed. The shield film (120) is coupled to the rail (152) provided inside the groove (151), and the position of the shield film (120) can be easily changed due to the wheels provided in the rail (152).

The position change part (150) may be provided inside the support part (112) of the frame (110), and may be provided outside. The position of the shield film (120) may be changed according to where the position change part (150) is provided.

The shield film (120) may be located at the lower end of the infrared heat source (130). Here, the lower end of the infrared heat source (130) may mean a region between the infrared heat source (130) and the current collector coated with the electrode slurry. The shield film (120) may block at least a portion of infrared rays (or heat) generated from the infrared heat source (130) by being positioned at the lower end of the infrared heat source (130).

Also, the shield film (120) may be positioned in the opening (111). At this time, the position change part (150) may be provided inside the support part (112) of the frame (110). The meaning that it is positioned in the opening (111) means that some or all of the shield film (120) are positioned in the opening (111).

Meanwhile, the opening (111) may have a depth equal to the thickness of the support part (112), and may be divided into an upper end or a lower end. Here, the upper end of the opening (111) means the vicinity of the surface of the opening (111) that is not inside the opening (111) but is close to the infrared heat source (130), and the lower end of the opening (111) means the vicinity of the surface that is not inside the opening (111), but is far from the infrared heat source (130) in the opening (111). The shield film (120) may be located at the upper end or the lower end of the opening (111). At this time, the position change part (150) may be provided on the support part (112) of the frame (110).

Referring to Figure 4, an example of the shield film (121) positioned at the upper end of the opening (111), the shield film (122) provided inside the opening (111), and the shield film (123) positioned at the lower end of the opening (111) can be confirmed. Figure 4 only shows one example of the position of the shield film (120), which may be provided at one or more of the upper end, the inside, and the lower end of the opening (111).

When there is a plurality of shield films (120), the shield films (120) may be each independently positioned at one or more selected from the group consisting of the inside of the opening (111), the upper end of the opening (111) and the lower end of the opening (111).

In order to block at least a portion of infrared rays (or heat) generated by the infrared heat source (130), a coating body that an infrared reflection coating or an infrared absorption (blocking) coating is formed on a base material, a coating body containing a compound that absorbs infrared rays in a base material, or other substrates that reflects or absorbs infrared rays, and the like may be used as the shield film (120), and for example, a stainless steel plate and the like may be used, without being particularly limited thereto.

In addition, if the shield film (120) can block infrared rays (or heat) passing through the opening (111), the shape and arrangement thereof are not particularly limited.

The infrared heat source module (10) according to one example of the present application comprises an infrared heat source (130). Infrared rays (or heat) generated from the infrared heat source (130) pass through the opening (111) of the frame (110), where the infrared rays (or heat) passing through the opening (111) may dry the electrode slurry coated on the current collector. However, when the shield film (120) is present on the traveling path of the infrared rays (or heat) generated from the infrared heat source (130), the infrared rays (or heat) are blocked from reaching the current collector at a position corresponding to the shield film (120).

The infrared heat source (130) emits light having a wavelength of 3 $\mu$m or more, 4 $\mu$m or more, 5 $\mu$m or more, 6 $\mu$m

or more, 7 µm or more, 8 µm or more, 9 µm or more, 10 µm or more, 15 µm or more, or 20 µm or more, and in another example, the infrared heat source (130) may emit light having a wavelength of 50 µm or less, 48 µm or less, 46 µm or less, 44 µm or less, 42 µm or less, 40 µm or less, 35 µm or less, or 30 µm or less. The wavelength of the light emitted by the infrared heat source (130) may be within a range formed by appropriately selecting the upper and lower limits as described above.

As described above, the emitted light may be exposed to the outside through the opening (111), where the exposed light may reach the electrode slurry coated on the current collector, thereby drying the electrode slurry.

If the infrared heat source (130) can emit light at a fixed position, the fixing means is not particularly limited. Referring to Figure 1, the infrared heat source (130) may be fixed by a fixing part (160) present in the frame (110). That is, the infrared heat source (130) may be fixed to the frame (110) by the fixing part (160), and when the infrared heat source (130) is fixed, the current collector may be irradiated with a predetermined amount of light.

Also, if the infrared heat source (130) can emit light toward the opening (111), the shape thereof is not particularly limited. Referring to Figure 1, the infrared heat source (130) may have a shape extending in one direction.

In addition, one or more infrared heat sources (130) may be provided, and the number is not particularly limited. Referring to Figure 1, the infrared heat source module (10) may also be provided with two infrared heat sources (130).

The infrared heat source module (10) according to one example of the present application may further comprise a control device for recognizing the uncoated part on the current collector and controlling the shield film (120) so that it is automatically repositioned at the corresponding position.

The control device may recognize the coated part and the uncoated part existing in the current collector, compile the location of the uncoated part into data, and then control the shield film (120) to be repositioned at a position corresponding to the uncoated part. At this time, the control device may change the position of the shield film (120) by controlling the position change part (150).

In addition, the control device may control the shield film (120) closest to a plane distance to be repositioned at a position corresponding to the uncoated part. Here, the plane distance may mean a distance between respective objects in a plane generated when viewed from the position of the infrared heat source (130) toward the frame (110).

A method of manufacturing an electrode according to one example of the present application comprises a step of drying an electrode slurry formed on a current collector.

In the current collector, a coated part that the electrode slurry is coated and an uncoated part that the electrode slurry is not coated are present, where the uncoated part may also be referred to as an un-patterned part.

Also, in the method of manufacturing an electrode according to one example of the present application, the drying may use an infrared heat source module according to one example of the present application, and may be performed, in a state where the infrared heat source module is placed on the slurry-coated current collector, by applying infrared rays (or heat) using the module. Here, the infrared heat source module may be positioned at a position having an appropriate height difference without contacting the coated current collector or the electrode slurry coated on the current collector so that infrared rays (or heat) may be applied to the coated part present in the current collector.

In addition, in the method of manufacturing an electrode according to one example of the present application, the shield film of the infrared heat source module may be positioned in the drying process so that at least a portion of the infrared rays (or heat) applied from the infrared heat source of the heat source module to the uncoated part is blocked. Here, the place where the shield film of the infrared heat source module is positioned to block at least a portion of infrared rays (or heat) applied to the uncoated part may be defined as a position corresponding to the uncoated part.

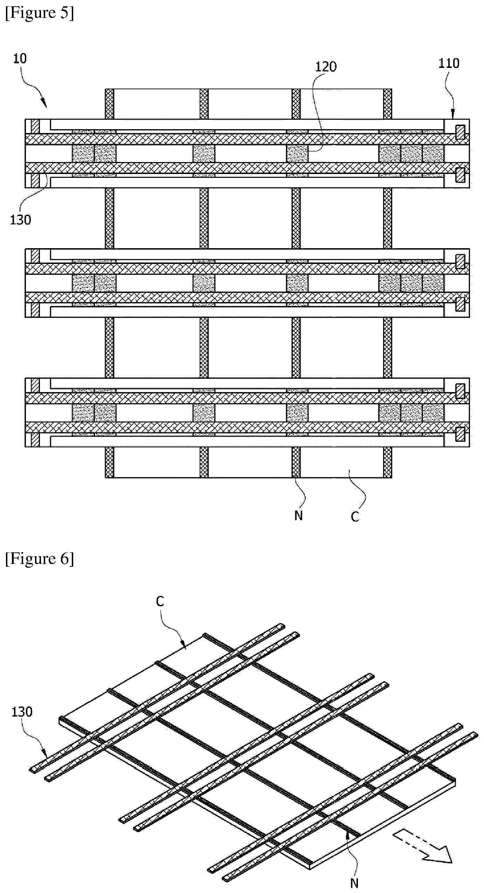

Referring to Figure 5, it can be confirmed that the coated part (C) in which the electrode slurry is coated and the uncoated part (N) in which the electrode slurry is not coated are present, and the infrared heat source module (10) according to one example of the present application is positioned on the current collector moving in one direction, thereby drying the coated part (C) coated on the current collector. Here, the shield film (120) of the infrared heat source module (10) is present at a position corresponding to the uncoated part (N) on the current collector, thereby being capable of blocking at least a portion of the infrared rays (or heat) emitted from the infrared heat source (130).

Conventionally, as in Figure 6, the drying was performed in a batch without distinction between the coated part (C) and the uncoated part (N) on the current collector, but due to the coefficients of thermal expansion between the coated part (C) and the uncoated part (N), there were problems such as wrinkles or cracks in the electrodes.

In this regard, by blocking a part of infrared rays (or heat) reaching the uncoated part on the current collector with the shield film (120) of the infrared heat source module (10), the method of manufacturing an electrode according to one example of the present application may reduce the difference in thermal expansion between the coated part and the uncoated part, and prevent problems such as wrinkles or cracks in the electrodes.

Also, in the method of manufacturing an electrode according to one example of the present application, the drying may be performed while the current collector on which the electrode slurry is formed moves in one direction. That is, in the method of manufacturing an electrode, the coated part may be dried by the infrared heat source module (10) while the current collector continues to move in one direction, and by blocking at least a portion of infrared rays (or heat) reaching the uncoated part due to the shield film (120) of the infrared heat source module (10), it can prevent problems such as wrinkles or cracks in the electrodes while it is possible to perform continuous drying.

In the method of manufacturing an electrode according to one example of the present application, the infrared heat source module (10) may move in the same direction as one direction in which the current collector moves, or in the opposite direction thereof, and in the process in which the infrared heat source module (10) moves, the shield film (120) may be positioned to block at least a portion of infrared rays (or heat) reaching the uncoated part.

The method of manufacturing an electrode may also dry the coated part on the current collector while the infrared heat source module (10) is fixed, but it may also dry the coated part on the current collector while it moves in the same direction as one direction in which the current collector moves, or in the opposite direction thereof. Even in this case, the shield film (120) of the infrared heat source module (10) is continuously positioned at a position corresponding to the uncoated part, whereby at least a portion of infrared rays (or heat) reaching the uncoated part can be blocked.

In addition, in the method of manufacturing an electrode, even when the position of the uncoated part on the current collector is changed while the infrared heat source module (10) moves, the shield film (120) of the infrared heat source module (10) is continuously positioned at a position corresponding to the uncoated part whose position has changed, whereby it is possible to block at least a portion of infrared rays (or heat) reaching the uncoated part.

In the method of manufacturing an electrode according to one example of the present application, two or more uncoated parts present in the current collector may exist, and the shield films (120) of the infrared heat source module (10) may be positioned and disposed between all the uncoated parts and the infrared heat source (130).

That is, in the method of manufacturing the electrode, when two or more uncoated parts are present in the current collector, the number of shield films (120) may be equal to or greater than the number of uncoated parts, and the shield films (120) are positioned at positions corresponding to all uncoated parts, respectively, whereby it is possible to block at least a portion of infrared rays (or heat) reaching all uncoated parts.

In the method of manufacturing an electrode according to one example of the present application, the relationship between the width of the shield film and the width of the uncoated part present in the current collector may be defined as an A value according to the following general equation 1, and considering the drying efficiency, the A value below may be 1 or more, 1.5 or more, 2 or more, 2.5 or more, 3 or more, or 3.5 or more, and in another example, it may also be 10 or less, 9.5 or less, 9 or less, 8.5 or less, or 8 or less. The A value according to the following general equation 1 may be within a range formed by appropriately selecting the upper and lower limits as listed above.

$$[\text{General Equation 1}]$$

$$A = W_1/W$$

In General Equation 1, $W_1$ means the width of the shield film, and $W$ means the width of the uncoated part.

In addition, in the method of manufacturing an electrode according to one example of the present application, the relationship between the distance between the shield film and the infrared heat source and the distance between the current collector and the shield film may be defined as a B value according to the following general equation 2, and considering the drying efficiency, the B value below is 0.1 or more, 0.25 or more, 0.5 or more, or 0.75 or more, and in another example, it may also be 5 or less, 4 or less, 3 or less, or 2 or less. The B value according to the following general equation 2 may be within a range formed by appropriately selecting the upper and lower limits as listed above.

$$[\text{General Equation 2}]$$

$$B = H_2/H_1$$

In General Equation 2, $H_2$ means the distance between the shield film and the infrared heat source, and $H_1$ means the distance between the current collector and the shield film.

When the A value according to the general equation 1 and/or the B value according to the general equation 2 are within the above ranges, respectively, at most infrared rays (or heat) reach the coated part while at most infrared rays (or heat) do not reach the uncoated part, whereby it is possible to effectively dry the electrode slurry while preventing wrinkles or cracks of the electrodes due to the difference in coefficients of thermal expansion.

Hereinafter, the present invention will be described with reference to Examples and Comparative Examples, but the scope of the present invention is not limited due to the contents presented below.

**Example 1**

A negative electrode slurry was coated on a copper foil, which is a current collector made of a long sheet-shaped metal foil, to form a pattern. At this time, in the pattern, three coated parts with a predetermined separation distance were formed so that a total of four uncoated parts are formed including each side of the copper foil.

The infrared heat source module was positioned so that the frame extending in one direction of the infrared heat source module according to one example of the present application and the moving direction of the copper foil were perpendicular to each other. At this time, the copper foil is made of a long sheet-like metal foil, so that it may appear to be continuously moved, and the copper foil may move using an unwind-up roller and a wind-up roller.

Meanwhile, the ratio ($H_2/H_1$) of the distance ($H_2$) between the shield film and the infrared heat source to the distance ($H_1$) between the copper foil and the shield film of the infrared heat source module was set to about 1, the ratio ($W_1/W$) of the width ($W_1$) of the shield film and the width ($W$) of the uncoated part was set to about 4, and a stainless-steel plate was used as the shield film.

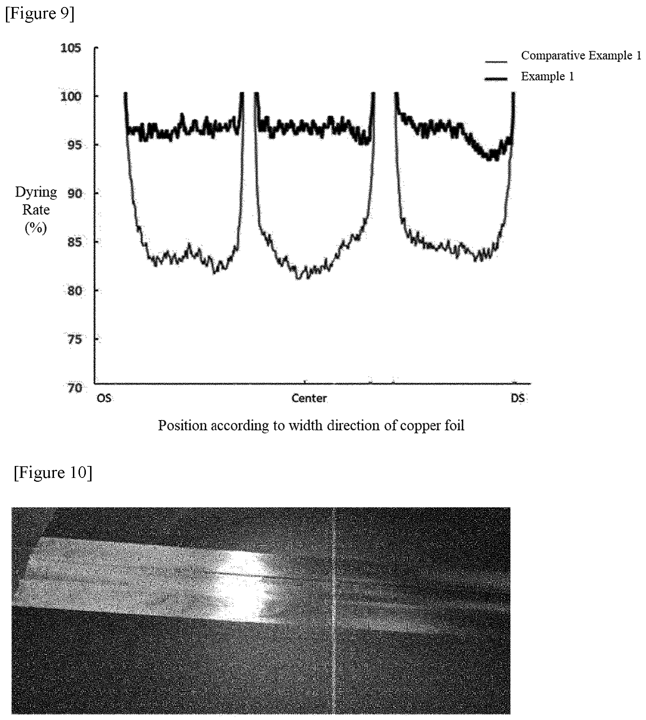

As shown in Figure 7, the shield film was coupled to the groove of the position change part mounted on the frame, and the shield films were repositioned at positions corresponding to the uncoated parts of the copper foil, respectively, thereby performing the drying. After performing the drying, the drying rates were measured and shown in Figures 8 and 9.

**Comparative Example 1**

The drying was performed in the same manner as in Example 1, except that an infrared heat source module without a shield plate was used instead of the infrared heat source module according to one example of the present application. After performing the drying, the drying rates were measured and shown in Figures 8 and 9.

In Example 1 and Comparative Example 1, the drying rates were measured by the Beta Ray method, and the amounts of moisture evaporation were calculated and measured using Honeywell or Yokogawa's web gauge.

Figures 8 and 9 are views relating to the drying rates of the coated parts present in the current collectors measured in Example 1 and Comparative Example 1. Referring to Figure 8, the drying rates of the coated parts are shown according to colors for each location. The part in the form of a white band for which the drying rate is not measured indicates the uncoated part. Referring to Figure 9, the drying rates of the coated part are shown for each position along the width direction of the copper foil, and the part where the drying rate is not measured indicates the uncoated part.

Referring to Figures 8 and 9, Example 1 was dried uniformly overall, and showed a high drying rate of about 90% or more. On the contrary, in Comparative Example 1, the drying was not performed uniformly, and wrinkles were generated on the electrodes, and showed a relatively low drying rate.

Figure 10 is a view of an electrode in which wrinkles are generated through a drying process according to Comparative Example 1. Referring to Figure 10, it can be confirmed in Comparative Example 1 that wrinkles have been generated in the electrodes due to the difference in the coefficients of thermal expansion between the coated part and the uncoated part, and overdrying of the uncoated part.

As such, in the case of using the infrared heat source module according to one example of the present application, by minimizing infrared rays (or heat) from reaching the uncoated part and allowing infrared rays (or heat) to reach the coated part, it is possible to prevent the occurrence of wrinkles or cracks, and the like, and it is possible to improve the drying efficiency of the electrode slurry for the coated part.

[Explanation of Reference Numerals]

| | | | |
|---|---|---|---|
| 110: | frame | 150: | position change part |
| 111: | opening | 160: | fixing part |
| 112: | support part | C: | coated part |
| 120: | shield film | N: | uncoated part |
| 130: | infrared heat source | | |

**Claims**

1. An infrared heat source module (10) for drying an electrode slurry, comprising:

a frame (110) extending in one direction;
at least one shield film (120) mounted on the frame (110); and
an infrared heat source (130) mounted on the frame (110),
wherein the shield film (120) is mounted on the frame (110) and configured for repositioning along the one direction of the frame (110), and

9

wherein the shield film (120) is configured for blocking at least a portion of the heat generated from the infrared heat source,

wherein the infrared heat source module (10) further comprises a position change part (150) mounted on the frame (110) to enable a position change of the at least one shield film (120),

wherein the infrared heat source (130) is configured to emit light having a wavelength ranging from 3 μm to 50 μm,

wherein a groove (151) having a predetermined space formed in the position change part (150), and a portion of the shield film (120) is inserted into the groove (151) to couple the shield film (120) to the groove (151),

**characterized in that** the position change part (150) further comprises a rail (152) which is provided in the groove (151), the shield film (120) being coupled to the rail (152), and **in that** the position of the shield film can be easily changed due to wheels provided on the rail (152).

2. The infrared heat source module (10) according to claim 1, wherein the frame (110) comprises an opening (111) so that the heat generated from the infrared heat source (130) is exposed to an outside and wherein the at least one shield film (120) is preferably positioned at one or more positions selected from the group consisting of an inside of the opening (111), an upper end of the opening (111), and a lower end of the opening (111).

3. The infrared heat source module (10) according to claim 1, wherein a plurality of shield films (120) is present, and each of the plurality of shield films (120) is independently configured for repositioning.

4. The infrared heat source module (10) according to claim 1, further comprising a fixing part (160) configured for fixing the infrared heat source (130) to the frame (110).

5. The infrared heat source module (10) according to claim 1, further comprising a control device configured for automatically repositioning the shield film (120).

6. A method of manufacturing an electrode, comprising:

drying an electrode slurry formed on a current collector using the infrared heat source module (10) of claim 1, wherein a coated part (C) coated by the electrode slurry and an uncoated part (N) uncoated by the electrode slurry are present on the current collector,

wherein the shield film (120) of the infrared heat source module (10) is positioned to block at least some of the portion of heat applied from the infrared heat source (130) to the uncoated part (N) during the drying, and wherein the drying is performed by applying heat from the infrared heat source module (10) in a state where the infrared heat source module (10) is placed on the current collector coated with the electrode slurry.

7. The method of manufacturing an electrode according to claim 6, wherein the drying is performed while the current collector on which the electrode slurry is formed moves in one direction.

8. The method of manufacturing an electrode according to claim 7, wherein the infrared heat source module (10) is movable in the one direction in which the current collector moves or in an opposite direction to the one direction, and wherein, when moving the infrared heat source module (10), the shield film (120) of the infrared heat source module (10) is positioned to block at least some of the portion of heat applied from the infrared heat source (130) to the uncoated part (N).

9. The method of manufacturing an electrode according to claim 6, wherein two or more uncoated parts (N) are present, and wherein the shield film (120) of the infrared heat source module (10) is arranged to be positioned between each of the uncoated parts (N) and the infrared heat source (130).

10. The method of manufacturing an electrode according to claim 6, wherein an A value according to the following general equation 1 is from 1 to 10:

[General Equation 1]

$$A = W_1/W$$

wherein, $W_1$ means a width of the shield film (120), and W means a width of the uncoated part (N).

11. The method of manufacturing an electrode according to claim 6, wherein a B value according to the following general equation 2 is from 0.1 to 5:

$$[General\ Equation\ 2]$$

$$B = H_2/H_1$$

wherein, $H_2$ means a distance between the shield film (120) and the infrared heat source, and $H_1$ means a distance between the current collector and the shield film (120).

**Patentansprüche**

1. Infrarot-Wärmequellenmodul (10) zum Trocknen einer Elektrodenpaste, umfassend:

   einen Rahmen (110), welcher sich in einer Richtung erstreckt;
   wenigstens einen Abschirmfilm (120), welcher an dem Rahmen (110) montiert ist; und
   eine Infrarot-Wärmequelle (130), welche an dem Rahmen (110) montiert ist,
   wobei der Abschirmfilm (120) an dem Rahmen (110) montiert ist und zum Neupositionieren entlang der einen Richtung des Rahmens (110) eingerichtet ist, und
   wobei der Abschirmfilm (120) dazu eingerichtet ist, wenigstens einen Teil der von der Infrarot-Wärmequelle (130) erzeugten Wärme zu blockieren,
   wobei das Infrarot-Wärmequellenmodul (10) ferner ein Positionsänderungsteil (150) umfasst, welches an dem Rahmen (110) montiert ist, um eine Positionsänderung des wenigstens einen Abschirmfilms (120) zu ermöglichen,
   wobei die Infrarot-Wärmequelle (130) dazu eingerichtet ist, Licht mit einer Wellenlänge, welche von 3 μm bis 50 μm reicht, zu emittieren,
   wobei eine Nut (151), welche einen vorbestimmten Raum aufweist, in dem Positionsänderungsteil (150) gebildet ist, und ein Abschnitt des Abschirmfilms (120) in die Nut (151) eingeführt ist, um den Abschirmfilm (120) mit der Nut (151) zu koppeln,
   **dadurch gekennzeichnet, dass** der Positionsänderungsteil (150) ferner eine Schiene (152) umfasst, welche in der Nut (151) bereitgestellt ist, wobei der Abschirmfilm (120) mit der Schiene (152) gekoppelt ist, und
   dass die Position des Abschirmfilms leicht geändert werden kann durch Räder, welche an der Schiene (152) bereitgestellt sind.

2. Infrarot-Wärmequellenmodul (10) nach Anspruch 1,

   wobei der Rahmen (110) eine Öffnung (111) umfasst, sodass die von der Infrarot-Wärmequelle (130) generierte Wärme einem Äußeren ausgesetzt ist,
   und wobei der wenigstens eine Abschirmfilm (120) vorzugsweise an einer oder mehreren Positionen, ausgewählt aus der Gruppe bestehend aus einer Innenseite der Öffnung (111), einem oberen Ende der Öffnung (111) und einem unteren Ende der Öffnung (111), positioniert ist.

3. Infrarot-Wärmequellenmodul (10) nach Anspruch 1,

   wobei eine Mehrzahl von Abschirmfilmen (120) vorhanden sind,
   und jeder der Mehrzahl von Abschirmfilmen (120) unabhängig für eine Neupositionierung eingerichtet ist.

4. Infrarot-Wärmequellenmodul (10) nach Anspruch 1,
   ferner umfassend einen Befestigungsteil (160), welcher dazu eingerichtet ist, die Infrarot-Wärmequelle (130) an dem Rahmen (110) zu befestigen.

5. Infrarot-Wärmequellenmodul (10) nach Anspruch 1,
   ferner umfassend eine Steuervorrichtung, welche dazu eingerichtet ist, den Abschirmfilm (120) automatisch neu zu positionieren.

6. Verfahren zur Herstellung einer Elektrode, umfassend:

Trocknen einer Elektrodenpaste, welche an einem Stromkollektor gebildet ist, unter Verwendung des Infrarot-Wärmequellenmoduls (10) nach Anspruch 1,

wobei ein beschichteter Teil (C) mit der Elektrodenpaste beschichtet ist und ein unbeschichteter Teil (N), welcher nicht beschichtet mit der Elektrodenpaste ist, an dem Stromkollektor vorhanden sind,

wobei der Abschirmfilm (120) des Infrarot-Wärmequellenmoduls (10) so positioniert ist, um wenigstens einiges des Teils einer Wärme zu blockieren, welche während des Trocknens von der Infrarot-Wärmequelle (130) auf den unbeschichteten Abschnitt (N) angewandt wird, und

wobei das Trocknen durch Anwenden von Wärme von der Infrarot-Wärmequelle (130) durchgeführt wird, in einem Zustand, in welchem das Infrarot-Wärmequellenmodul (10) an dem Stromkollektor, welcher mit der Elektrodenpaste beschichtet ist, platziert ist

7. Verfahren zur Herstellung einer Elektrode nach Anspruch 6,
wobei das Trocknen durchgeführt wird, während der Stromkollektor, an welchem die Elektrodenpaste gebildet ist, sich in einer Richtung bewegt.

8. Verfahren zur Herstellung einer Elektrode nach Anspruch 7,

wobei das Infrarot-Wärmequellenmodul (10) in der einen Richtung, in welcher sich der Stromkollektor bewegt, oder in einer zu der einen Richtung entgegengesetzten Richtung beweglich ist,

und wobei beim Bewegen des Infrarot-Wärmequellenmoduls (10) der Abschirmfilm (120) des Infrarot-Wärmequellenmoduls (10) positioniert ist, um wenigstens einiges des Teils einer Wärme zu blockieren, welcher von der Infrarot-Wärmequelle (130) auf den unbeschichteten Teil (N) angewandt wird.

9. Verfahren zur Herstellung einer Elektrode nach Anspruch 6,

wobei zwei oder mehr unbeschichtete Teile (N) vorhanden sind,
und wobei der Abschirmfilm (120) des Infrarot-Wärmequellenmoduls (10) angeordnet wird, um zwischen jedem der unbeschichteten Teile (N) und der Infrarot-Wärmequelle (130) positioniert zu sein.

10. Verfahren zur Herstellung einer Elektrode nach Anspruch 6,

wobei ein A-Wert gemäß der folgenden allgemeinen Gleichung 1 von 1 bis 10 ist:

[Allgemeine Gleichung 1]

$$A = W_1 / W$$

wobei $W_1$ eine Breite des Abschirmfilms (120) bedeutet und W eine Breite des unbeschichteten Teils (N) bedeutet.

11. Verfahren zur Herstellung einer Elektrode nach Anspruch 6,

wobei ein B-Wert gemäß der folgenden allgemeinen Gleichung 2 von 0,1 bis 5 ist:

[Allgemeine Gleichung 2]

$$B = H_2 / H_1$$

wobei $H_2$ einen Abstand zwischen dem Abschirmfilm (120) und der Infrarot-Wärmequelle (130) bedeutet, und $H_1$ einen Abstand zwischen dem Stromkollektor und dem Abschirmfilm (120) bedeutet.

**Revendications**

1. Module de source de chaleur infrarouge (10) pour le séchage d'une suspension d'électrode, comprenant :

un cadre (110) s'étendant dans une direction ;
au moins un film protecteur (120) monté sur le cadre (110) ; et

une source de chaleur infrarouge (130) montée sur le cadre (110),

dans lequel le film protecteur (120) est monté sur le cadre (110) et configuré pour être repositionné le long d'une direction du cadre (110), et

dans lequel le film protecteur (120) est configuré pour bloquer au moins une partie de la chaleur générée par la source de chaleur infrarouge,

dans lequel

le module de source de chaleur infrarouge (10) comprend en outre une pièce de changement de position (150) montée sur le cadre (110) pour permettre un changement de position de l'au moins un film protecteur (120),

dans lequel la source de chaleur infrarouge (130) est configurée pour émettre de la lumière présentant une longueur d'onde de 3 $\mu$m à 50 $\mu$m,

dans lequel

une rainure (151) présente un espace prédéterminé formé dans la pièce de changement de position (150), et une partie du film protecteur (120) est insérée dans la rainure (151) pour coupler le film protecteur (120) à la rainure (151),

**caractérisé en ce que**

la pièce de changement de position (150) comprend en outre un rail (152) qui est prévu dans la rainure (151), le film protecteur (120) étant couplé au rail (152), et **en ce que** la position du film protecteur peut être facilement modifiée grâce à des roues prévues sur le rail (152).

2. Module de source de chaleur infrarouge (10) selon la revendication 1, dans lequel le cadre (110) comprend une ouverture (111) de sorte que la chaleur générée par la source de chaleur infrarouge (130) soit exposée à l'extérieur, et dans lequel l'au moins un film protecteur (120) est de préférence positionné à une ou plusieurs positions choisies dans le groupe comprenant l'intérieur de l'ouverture (111), l'extrémité supérieure de l'ouverture (111) et l'extrémité inférieure de l'ouverture (111).

3. Module de source de chaleur infrarouge (10) selon la revendication 1, dans lequel une pluralité de films protecteurs (120) sont présents, et chacun des films protecteurs (120) est configuré indépendamment pour être repositionné.

4. Module de source de chaleur infrarouge (10) selon la revendication 1, comprenant en outre une pièce de fixation (160) configurée pour fixer la source de chaleur infrarouge (130) au cadre (110).

5. Module de source de chaleur infrarouge (10) selon la revendication 1, comprenant en outre un dispositif de commande configuré pour repositionner automatiquement le film protecteur (120).

6. Procédé de fabrication d'une électrode, comprenant :

le séchage d'une suspension d'électrode formée sur un collecteur de courant à l'aide du module de source de chaleur infrarouge (10) selon la revendication 1,

dans lequel une pièce enduite (C) qui est enduite par la suspension d'électrode et une pièce non enduite (N) qui n'est pas enduite par la suspension d'électrode sont présentes sur le collecteur de courant,

dans lequel le film protecteur (120) du module de source de chaleur infrarouge (10) est positionné pour bloquer au moins une partie de la chaleur appliquée de la source de chaleur infrarouge (130) à la pièce non enduite (N) pendant le séchage, et

dans lequel le séchage est réalisé en appliquant de la chaleur provenant du module de source de chaleur infrarouge (10) dans un état dans lequel le module de source de chaleur infrarouge (10) est placé sur le collecteur de courant enduit de la suspension d'électrode.

7. Procédé de fabrication d'une électrode selon la revendication 6, dans lequel le séchage est réalisé pendant que le collecteur de courant, sur lequel la suspension d'électrode est formée, se déplace dans une direction.

8. Procédé de fabrication d'une électrode selon la revendication 7, dans lequel le module de source de chaleur infrarouge (10) est mobile dans une direction dans laquelle le collecteur de courant se déplace ou dans une direction opposée à la cette direction, et dans lequel, lors du déplacement du module de source de chaleur infrarouge (10), le film protecteur (120) du module de source de chaleur infrarouge (10) est positionné pour bloquer au moins partiellement la partie de la chaleur appliquée de la source de chaleur infrarouge (130) à la pièce non enduite (N).

9. Procédé de fabrication d'une électrode selon la revendication 6, dans lequel deux pièces non enduites (N) ou plus sont présentes, et dans lequel le film protecteur (120) du module de source de chaleur infrarouge (10) est agencé de manière à être positionné entre chacune des pièces non enduites (N) et la source de chaleur infrarouge (130).

10. Procédé de fabrication d'une électrode selon la revendication 6, dans lequel une valeur A, conformément à l'équation générale 1 ci-après, est de 1 à 10 :

[Équation générale 1]

$$A = W_1/W$$

dans lequel $W_1$ représente la largeur du film protecteur (120), et W représente la largeur de la pièce non enduite (N).

11. Procédé de fabrication d'une électrode selon la revendication 6, dans lequel une valeur B, conformément à l'équation générale 2 suivante, est de 0,1 à 5 :

[Équation générale 2]

$$B = H_2/H_1$$

dans lequel $H_2$ représente la distance entre le film protecteur (120) et la source de chaleur infrarouge, et $H_1$ représente la distance entre le collecteur de courant et le film protecteur (120).

[Figure 1]

[Figure 2]

[Figure 3]

[Figure 4]

Hot wire direction
(above)

Electrode direction
(below)

[Figure 5]

[Figure 6]

[Figure 7]

[Figure 8]

[Figure 9]

Position according to width direction of copper foil

[Figure 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210080776
- KR 1020160037763
- CN 206153096 U
- JP 2012198012 A